# EUROPÄISCHE PATENTSCHRIFT

(11) **EP 1 501 185 B1**
(45) Veröffentlichungstag und Bekanntmachung des Hinweises auf die Patenterteilung: **09.09.2009**
(21) Anmeldenummer: 04016385.9
(22) Anmeldetag: 13.07.2004
(51) Int. Cl.: H02P 6/18

(54) **Verfahren und Vorrichtung zum Positionieren einer drehbaren Einrichtung**
Method and arrangement for positioning a rotating device
Méthode et dispositif pour positionner un dispositif rotatif

(30) Priorität: 15.07.2003 DE 10333414
(43) Veröffentlichungstag der Anmeldung: 26.01.2005
(60) Teilanmeldung: 08022001.5
(73) Patentinhaber: Sauter Feinmechanik GmbH, D-72555 Metzingen (DE)
(72) Erfinder: Köhler, Frank, 70794 Filderstadt (DE); Sahm, Detlef Dieter, 73669 Lichtenwald (DE)
(74) Vertreter: Bartels & Partner

(56) Entgegenhaltungen:
- EP-B- 1 133 050
- US-A1- 2003 030 404
- PATENT ABSTRACTS OF JAPAN Bd. 2003, Nr. 07, 3. Juli 2003 (2003-07-03) -& JP 2003 079183 A (MITSUBISHI ELECTRIC CORP), 14. März 2003 (2003-03-14)
- PATENT ABSTRACTS OF JAPAN Bd. 1999, Nr. 04, 30. April 1999 (1999-04-30) -& JP 11 018499 A (YASKAWA ELECTRIC CORP), 22. Januar 1999 (1999-01-22)
- PATENT ABSTRACTS OF JAPAN Bd. 1999, Nr. 05, 31. Mai 1999 (1999-05-31) -& JP 11 055994 A (YASKAWA ELECTRIC CORP), 26. Februar 1999 (1999-02-26)

## Beschreibung

Die Erfindung betrifft ein Verfahren zum Betrieb einer motorischen Positionierungsvorrichtung nach dem Oberbegriff des Anspruchs 1 sowie eine zugehörige Positionierungsvorrichtung zum Positionieren einer drehbaren Einrichtung, insbesondere eines Werkzeugrevolvers.

Bei den bekannten Verfahren zum Betrieb einer motorischen Positionierungsvorrichtung, beispielsweise für den Antrieb eines
Werkzeugrevolvers bei einer Werkzeugmaschine, werden sogenannte Positionsgeber eingesetzt, deren Ausgangssignal den Istwert für die Regeleinrichtung bereitstellt. Bei modernen Werkzeugmaschinen treten aufgrund der geforderten kurzen Bearbeitungszeiten hohe Kräfte und mithin auch starke Vibrationen auf, die den Einsatz jedweder Meßeinrichtung für die Positionsbestimmung erschweren oder sogar unmöglich machen.

Aus der JP 2003079183 ist eine Step-out Erkennungseinrichtung und eine zugehöriges Betriebsverfahren für einen Synchronmotor gemäß dem Oberbegriff des Anspruchs 1 bekannt.

Der Erfindung liegt daher die Aufgabe zugrunde, ein Verfahren und eine zugehörige Vorrichtung bereitzustellen, durch welche die Nachteile des Standes der Technik überwunden werden. Insbesondere soll ein Verfahren zum Betrieb einer motorischen Positionierungsvorrichtung bereitgestellt werden, mittels dem eine sensorlose Positionsbestimmung und eine dauerhaft zuverlässige exakte Positionierung mit hoher Positionierungsgeschwindigkeit gewährleistet ist. Die zugehörige Positionierungsvorrichtung soll eine hohe Betriebssicherheit bei hoher Positionierungsgeschwindigkeit und hoher Positionierungsgenauigkeit bereitstellen.

Diese Aufgabe ist durch das im Anspruch 1 bestimmte Verfahren sowie durch die im nebengeordneten Anspruch 10 bestimmte Positionierungsvorrichtung gelöst. Besondere Ausführungsarten der Erfindung sind in den Unteransprüchen bestimmt.

Oberhalb der Mindestdrehzahl kann für das Verfahren ein sogenannter Positionsschätzer verwendet werden, wie er z.B. aus der Druckschrift Chen Z. u.a.: "New Adaptive Sliding Observer for Sensorless Control of Surface Permanent Magnet Synchronous Motor" IEEE Transactions on Industrial Electronics, Vol. 47, No. 3, 2000, Seiten 582 - 591, bekannt ist. Derartige Positionsschätzer funktionieren allerdings erst ab etwa 10% der Nenndrehzahl des Elektromotors mit ausreichender Genauigkeit und Zuverlässigkeit. Unterhalb dieses Drehzahlwertes kann es beispielsweise aufgrund des auftretenden Signalrauschens zu Signalverfälschungen und damit zu Meßungenauigkeiten kommen.

Bei einer erfindungsgemäßen Positionierungsvorrichtung, wie sie insbesondere für den Antrieb eines Werkzeugrevolvers oder eines Rundschalttisches verwendet wird, wird dieser untere Drehzahlbereich allerdings verhältnismäßig häufig durchfahren, insbesondere beim Beschleunigen und Abbremsen aus bzw. in einen Ruhezustand, in dem die vorgegebene Position eingehalten ist. Aufgrund der geforderten hohen Positionierungsgeschwindigkeiten kann es insbesondere beim Abbremsen des Elektromotors zum Überspringen eines Pols des Rotors gegenüber dem Stator kommen, was - wenn dies nicht korrigiert wird - zu einer tatsächlichen Fehlstellung des Rotors und damit der daran angeschlossenen zu positionierenden drehbaren Einrichtung führt. Aus diesem Grund hat die sensorlose Positionsbestimmung bei gattungsgemäßen Positionierungsvorrichtungen im Gegensatz zur Drehzahlregelung bisher noch keinen Eingang gefunden.

Bei dem Elektromotor handelt es sich vorzugsweise um einen Synchronmotor, beispielsweise einen Außenläufer, bei dem auf dem glockenförmigen außenlaufenden Rotor mit abwechselnder Polarität Permanentmagnete aufgebracht sind, insbesondere aufgeklebt sind. Entsprechend ist die Erfindung auch auf einen permanenterregten Innenläufer anwendbar. Die Polpaarzahl beträgt allgemein n ≥ 1, vorzugsweise n ≥ 3. Damit können innerhalb einer vollständigen 360° Umdrehung des Rotors um den Stator insgesamt 2xn stabile Positionen des Rotors in Bezug auf den Stator eingenommen werden. Einer vollständigen Umdrehung des Rotors von 360° entsprechen damit n sogenannte elektrische Umdrehungen. Vorzugsweise ist der Elektromotor als permanenterregter Synchronmotor ausgelegt. Insbesondere wird für die vorliegende Patentanmeldung ohne Beschränkung der Allgemeingültigkeit der Erfindung von einer dreiphasigen Synchronmaschine ausgegangen. Der Elektromotor wird vorzugsweise von einem Umrichter oder Inverter mit elektrischer Energie versorgt. Eingangsseitig werden dem Umrichter Strangspannungen vorgegeben, woraufhin der Umrichter Strangströme in den Elektromotor einspeist. Die Strangströme werden gemessen und hinsichtlich des Auftretens von Polsprüngen ausgewertet. Bei entsprechender Konstruktion des Umrichters wäre es auch denkbar, Strangspannungen als Meßgrößen zum Ermitteln des Auftretens von Polsprüngen heranzuziehen.

Erfindungsgemäß erfolgt das Ermitteln der Polsprünge in einer Polsprung-Erkennungseinheit der Regeleinrichtung der Positionierungsvorrichtung. Hierzu können entweder die unmittelbar gemessenen Strangströme verwendet werden, oder vorzugsweise die in ein zweiphasiges Bezugssystem transformierten Werte der gemessenen Strangströme, insbesondere die in ein entsprechendes rotorfestes Bezugssystem transformierten Werte. Gleichzeitig werden der Polsprung-Erkennungseinheit die Stellgrößen der Regeleinrichtung zugeführt, insbesondere die in ein zweiphasiges und vorzugsweise rotorfestes Bezugssystem transformierten Werte der Stellgrößen. Wird bei einem Vergleich der gemessenen Werte mit den Stellgrößen ein vorgebbarer Schwellwert überschritten, werden anschließend die jeweils einem Polsprung entsprechenden auftretenden Maxima aufsummiert und die sich durch die Polsprünge ergebende Fehlstellung der zu positionierenden Einrichtung anschließend kompensiert.

Es kann Ausführungsarten der Erfindung geben, bei denen diese Kompensation unmittelbar anschließend oder erst nach einem kurzen zwischenzeitlichen Stillstand der zu positionierenden Einrichtung bzw. des Elektromotors erfolgt. Andererseits kann die Kompensation bei entsprechender Rechenleistung auch bereits während der Positionierungsbewegung erfolgen, so daß gar keine separate Korrekturbewegung erforderlich ist. Häufig wird eine Kompensation in umgekehrter Bewegungsrichtung erforderlich sein, nämlich dann, wenn beim Beschleunigen und/oder Abbremsen des Elektromotors aufgrund der Trägheit der zu positionierenden Einrichtung das Drehmoment des Elektromotors nicht ausgereicht hat, ein oder mehrere Polsprünge verhindern.

In einer besonderen Ausführungsart der Erfindung handelt es sich bei der zu positionierenden drehbaren Einrichtung um einen Werkzeugrevolver oder um einen sogenannten Rundschalttisch. In einem solchen Fall kann zwischen dem Elektromotor und der zu drehenden Einrichtung eine lösbare Feststelleinrichtung, beispielsweise eine sogenannte Hirth-Verzahnung, zum Klemmen der Position der drehbaren Einrichtung angeordnet sein. Durch diese Feststelleinrichtung können sehr hohe Klemmkräfte aufgebracht werden, die ein sicheres Klemmen der Einrichtung auch beim Auftreten hoher äußerer Kräfte und Drehmomente gewährleistet.
Die Klemmomente sind größer als die Antriebsmomente des Motors, bezogen auf die Drehachse der zu positionierenden drehbaren Einrichtung.

Vorzugsweise wird der Elektromotor bereits vor dem Lösen der Feststelleinrichtung und/oder bis zum Aktivieren der Feststelleinrichtung bestromt. Dadurch ist gewährleistet, daß die von der motorischen Positionierungsvorrichtung eingestellte Position der drehbaren Einrichtung definiert auch an die Feststelleinrichtung übergeben wird bzw. die von der Feststelleinrichtung geklemmte Position an die Positionierungsvorrichtung übergeben wird.

Gemäß einer besonderen Ausführungsart der Erfindung wird mindestens ein Startwert für die tatsächliche, absolute Winkelposition der drehbaren Einrichtung durch einen Referenzierungsvorgang ermittelt.
Das Referenzieren kann beispielsweise durch Anfahren eines vorgegebenen Referenzpunktes, durch externes "teach-in", oder dgl. vorgenommen werden.

Die Erfindung betrifft auch eine zugehörige Positionierungsvorrichtung, deren Regeleinrichtung eine Polsprung-Erkennungseinheit aufweist, mittels der unterhalb einer vorgebbaren Mindestdrehzahl ein Polsprung des Rotors durch Auswerten der gemessenen Strangströme und/oder Strangspannungen ermittelbar ist und durch Nachregeln des Elektromotors automatisch kompensierbar ist. Das Nachregeln des Elektromotors kann im einfachsten Fall auch ein Nachlauf oder eine Nachsteuerung sein. Grundsätzlich kann das Nachregeln aber auch noch während des eigentlichen Positionierungsvorganges vorgenommen werden.

Weitere Vorteile, Merkmale und Einzelheiten der Erfindung ergeben sich aus den Unteransprüchen und der nachfolgenden Beschreibung, in der unter Bezugnahme auf die Zeichnungen ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.
- Fig. 1: zeigt eine erfindungsgemäße Positionierungsvorrichtung,
- Fig. 2: zeigt ein Blockschaltbild der erfindungsgemäßen Positionierungsvorrichtung, und
- Fig. 3: zeigt einen Querschnitt durch den Elektromotor einer erfindungsgemäßen Positionierungseinrichtung.

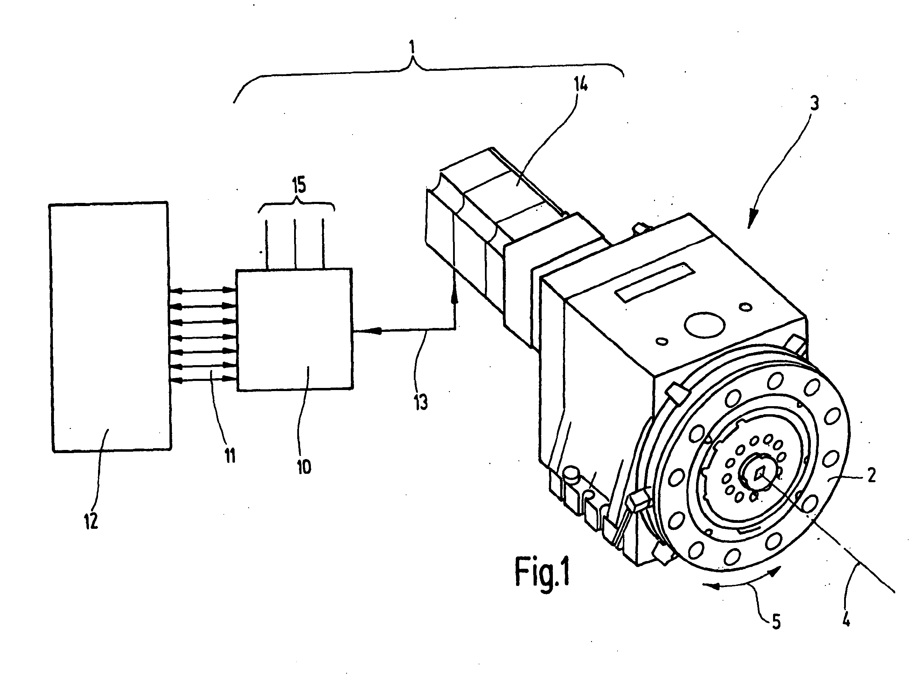

Die Fig. 1 zeigt eine erfindungsgemäße Positionierungsvorrichtung 1, die eine drehbare Aufnahmescheibe 2 eines Werkzeugrevolvers 3 positioniert, wie er beispielsweise bei einer Werkzeugmaschine eingesetzt wird.
In bekannter Weise können an der Aufnahmescheibe 2 unterschiedliche Werkzeugscheiben angeschraubt werden, an denen die Werkzeughalter axial oder radial befestigt werden. Die Werkzeuge können ihrerseits rotierend antreibbar sein. Die Aufnahmescheibe 2 ist um die Achse 4 in Richtung des Doppelpfeils 5 drehbar. Durch Drehen der Aufnahmescheibe 2 sind die Werkzeuge in Eingriff mit dem (nicht dargestellten) Werkstück bringbar.

Die erfindungsgemäße Positionierungsvorrichtung 1 weist eine Regeleinrichtung 10 auf, die über eine Schnittstelle 11 mit einer Maschinensteuerung 12 verbunden ist. Ausgangsseitig ist die Regeleinrichtung 10 über eine beispielsweise dreiphasige Anschlußleitung 13 mit dem Elektromotor 14 verbunden. Darüber hinaus verfügt die Regeleinrichtung 10 über einen Anschluß 15 zu einem elektrischen Energieversorgungsnetz.

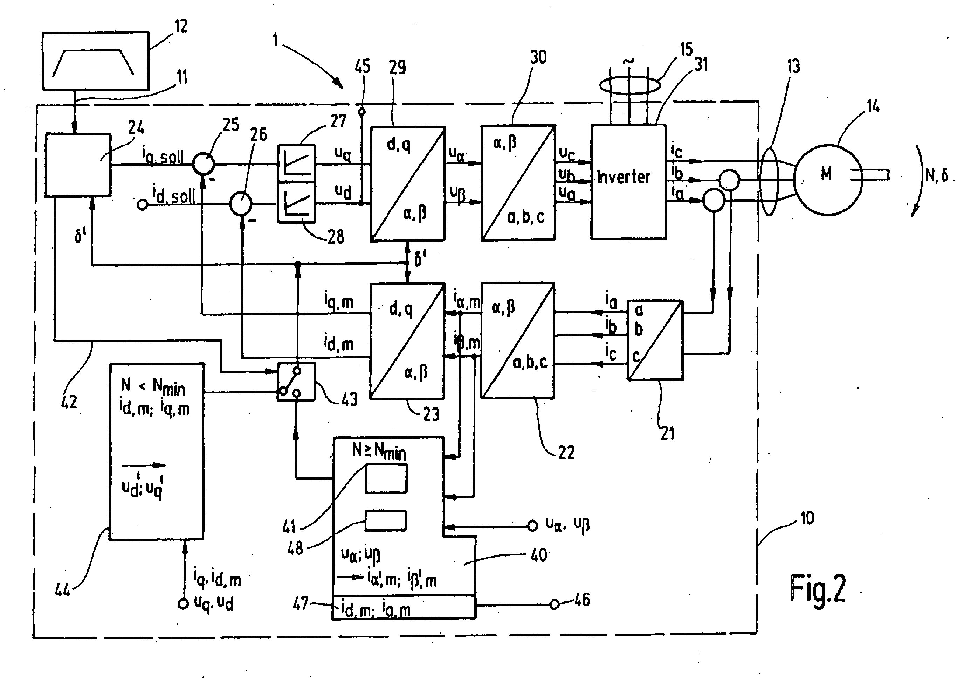

Die Fig. 2 zeigt ein Blockschaltbild der erfindungsgemäßen Positionierungsvorrichtung 1 und insbesondere der Regeleinrichtung 10. Bei dem Elektromotor 14 handelt es sich um eine dreiphasige permanenterregte Synchronmaschine mit der Motordrehzahl N und dem tatsächlichen Rotorlagewinkel δ. Im Ausführungsbeispiel werden als Meßgrößen die Strangströme iₐ, i_{b} und i_{c} verwendet. In entsprechender Weise könnten anstelle der Strangströme auch die Strangspannungen als Meßgrößen verwendet werden.

Die Strangströme iₐ, i_{b} werden noch innerhalb der Regeleinrichtung 10 meßtechnisch ermittelt. In der Recheneinheit 21 wird aus den zwei gemessenen Strangströmen iₐ, i_{b} gemäß der Bedingung iₐ+i_{b}+i_{c}=0 der dritte Strangstrom i_{c} errechnet. Die vorstehend genannte Bedingung gilt bei einer Dreieckschaltung und auch bei einer Sternschaltung der dreiphasigen Synchronmaschine, jedenfalls dann, wenn der Sternpunkt nicht zusätzlich elektrisch beschaltet ist.

Die Strangströme iₐ, i_{b}, i_{c} werden in der ersten Transformationseinheit 22 in ein äquivalentes Zweiphasensystem umgerechnet, wobei die daraus hervorgehenden Größen i_{α,m} und i_{β,m} den Realteil bzw. Imaginärteil repräsentieren. Dabei handelt es sich nach wie vor um ein statorfestes Zweiphasensystem.

In einer zweiten Transformationseinheit 23 werden die Größen i_{α,m} und i_{β,m} gemäß einer Clarke/Park-Transformation in die entsprechenden Größen i_{d,m} und i_{q,m} eines rotorfesten Zweiphasensystems transformiert. Dabei handelt es sich bei i_{d,m} um den Realteil des äquivalenten gemessenen Strangstromes und bei i_{q,m} um den Imaginärteil des äquivalenten gemessenen Strangstromes.

Die Werte i_{d,m}, i_{q,m} des rotorfesten Zweiphasensystems werden anschließend mit den Sollwertvorgaben i_{d,soll}, i_{q,soll} der Lageregelung 24 in entsprechenden Addierern 25, 26 verknüpft. Bei der Lageregelung 24 handelt es sich dabei vorzugsweise um einen Regler mit einer Proportional/Integral(PI)-Charakteristik, der über die Schnittstelle 11 eine Sollposition der Maschinensteuerung 12 vorgegeben bekommt.

Vorzugsweise gibt die Maschinensteuerung 12 lediglich vor, von einer Position A nach einer Position B zu fahren. Dies soll möglichst schnell erfolgen, wobei die Maschinensteuerung 12 die in der Fig. 2 vereinfacht dargestellte Rampe oder ein Bitmuster vorgeben kann, dies aber nicht muß. Gemäß der vorliegenden Erfindung kann insbesondere beim Anfahren von der Lageregelung 24 lediglich ein Sollwert i_{q,soll} vorgegeben werden, der dem für den Elektromotor 14 maximal zulässigen Wert entspricht.

Die erfindungsgemäße Regeleinrichtung 10 kann dabei in einem ersten Zeitabschnitt des Positionierungsvorgangs, insbesondere beim Beschleunigen, registrieren, welche Beschleunigungswerte im Hinblick auf die von dem Elektromotor 14 anzutreibende Last möglich sind.

Die Ausgangssignale des ersten und zweiten Addierers 25, 26 werden jeweils auf einen ersten und einen zweiten weiteren Regler 27, 28 gegeben, die im dargestellten Ausführungsbeispiel jeweils eine Proportional/Integral(PI)-Charakteristik aufweisen. Am Ausgang der beiden weiteren Regler 27, 28 stehen der Realteil u_{d} und der Imaginärteil u_{q} der Steuerspannung des rotorfesten Zweiphasensystems an.

Die Werte u_{d}, u_{q} werden durch die dritte Transformationseinheit 29 in äquivalente Werte des statorfesten Zweiphasensystems mit dem Realteil u_{α} und dem Imaginärteil u_{β} transformiert. Die dritte Transformationseinheit 29 führt dabei eine Transformation aus, die zu der Clarke/Park-Transformation der zweiten Transformationseinheit 23 invers ist.

Die vierte Transformationseinheit 30 transformiert die Werte u_{α}, u_{β} in Steuerspannungswerte uₐ, u_{b}, u_{c} für die drei Phasen des Elektromotors 14, die ihrerseits als Eingangsgrößen für den Umrichter oder Inverter 31 dienen. Die vierte Transformationseinheit 30 führt dabei eine Transformation aus, die zu der Transformation der ersten Transformationseinheit 22 invers ist.

Bei der ersten Transformationseinheit 22 handelt es sich um eine im wesentlichen trigonometrische Umrechnung im statorfesten Dreiphasensystem aus den Strangströmen iₐ, i_{b}, i_{c} des Elektromotors 14 in die äquivalenten Größen des Zweiphasensystems i_{α,m} und i_{β,m}. Bei der vierten Transformationseinheit 30 handelt es sich um eine im wesentlichen trigonometrische Umrechnung im statorfesten Dreiphasensystem aus den äquivalenten Steuerspannungen u_{α}, u_{β} in die Steuerspannungswerte uₐ, u_{b}, u_{c} für die drei Phasen des Elektromotors 14.

Der Umrichter 31 ist über den Anschluß 15 mit elektrischer Energie versorgt und weist ausgangsseitig die Anschlußleitung 13 für den Elektromotor 14 auf.

Für Drehzahlen N > Nₘᵢₙ oberhalb einer vorgebbaren Mindestdrehzahl Nₘᵢₙ wird die Position des Elektromotors 14 in jedem Fall von einer Positionsschätzungseinheit 40 ermittelt. Dieser Positionsschätzungseinheit 40 werden hierzu die den gemessenen Stranggrößen äquivalenten Werte i_{α,m} und i_{β,m} des statorfesten Zweiphasensystems zugeführt ebenso wie die Sollwerte der Steuerspannung u_{α} und u_{β} des statorfesten Zweiphasensystems. Hieraus ermittelt die Positionsschätzungseinheit 40 den geschätzten Rotorlagewinkel δ', der sowohl der Lageregelung 24 als auch der zweiten und dritten Transformationseinheit 23, 29 zugeführt wird.

Darüber hinaus ist in der Positionsschätzungseinheit 40 ein überlagerter Regler 41 angeordnet, der aus den vorgegebenen Werten u_{α} und u_{β} und den tatsächlichen Werten i_{α,m} und i_{β,m} nicht nur die Winkelposition schätzt, sondern aus den vorgegebenen Werten u_{α} und u_{β} anzunehmende Werte i_{α,m}' und i_{β,m}' bildet und diese mit den tatsächlichen Werten i_{α,m} und i_{β,m} vergleicht und aus diesem Vergleich die tatsächliche Rotordrehzahl N und den Rotorlagewinkel δ errechnet. Vorteilhaft ist, daß dadurch für die zum Schätzen der Winkelposition erforderliche Rotordrehzahl N keine Werte angenommen werden müssen und eine diesbezügliche Fehlerquelle ausgeschlossen ist.

Dem Realteil u_{d} der Steuerspannung des rotorfesten Zweiphasensystems wird ein Trägersignal 45 überlagert, beispielsweise der Form cos ωt, wobei die Drehfrequenz ω nicht notwendig in Bezug zur Drehzahl N des Elektromotors 14 steht. Das Trägersignal 45 dient zur magnetischen Erregung des Elektromotors 14, um einen Stillstand detektieren zu können. Das Trägersignal 45 kann hierzu permanent oder nur im Bereich unterhalb der Mindestdrehzahl Nₘᵢₙ überlagert werden.

Unterhalb der vorgegebenen Mindestdrehzahl Nₘᵢₙ wird ein dem Trägersignal 45 entsprechendes Hilfsträgersignal 46, beispielsweise der Form sin ωt, einer Auswerteeinheit 47 zugeschaltet, die der Positionsschätzungseinheit 40 angegliedert oder in diese integriert ist.
Die Auswerteeinheit 47 ermittelt unter Verwendung des Realteils i_{d,m} und des Imaginärteils i_{q,m} des rotorfesten Zweiphasensystems einen ermittelten Rotorlagewinkel δ*.

Gemäß einer besonderen und eigenständigen Ausführungsform der vorliegenden Erfindung erzeugt das Trägersignal 45 als Antwortsignal des Elektromotors 14 einen Strom i_{d,m}, i_{q,m}, der mit der Auswerteeinheit 47 unter Verwendung des Hilfsträgersignals 46 demoduliert wird. In einer vorzugsweise in die Positionsschätzungseinheit 40 integrierten Nachregeleinheit 48 wird die Differenz aus dem geschätzten Rotorlagewinkel δ' und dem von der Auswerteeinheit 47 ermittelten Rotorlagewinkel δ* gebildet, die in der Regel die Fehlstellung des Rotors anzeigt. Diese Differenz wird vorzugsweise nur intern in der Regeleinrichtung 10 oder auch nur in der Positionsschätzungseinheit 40 verwendet und soll auch unterhalb der vorgegebenen Mindestdrehzahl Nₘᵢₙ zu Null geregelt werden. Durch die Nachregeleinheit 48 wird der Elektromotor 14 so angesteuert, daß der geschätzte Rotorlagewinkel δ' dem tatsächlichen Rotorlagewinkel δ entspricht.

Unterhalb der vorgegebenen Mindestdrehzahl Nₘᵢₙ kann außerdem die Lageregelung 24 über die Steuerleitung 42 den Umschalter 43 von der Positionsschätzungseinheit 40 auf die Polsprung-Erkennungseinheit 44 umschalten, welche daraufhin die Positionsvorgabe und mithin die Ermittlung des geschätzten Rotorlagewinkels δ' für die Lageregelung 24 und die zweite und dritte Transformationseinheit 23, 29 übernimmt. Hierzu werden der Polsprung-Erkennungseinheit 44 die den gemessenen Strangströmen iₐ, i_{b} äquivalenten Werte des rotorfesten Zweiphasensystems i_{d,m} und i_{q,m} zugeführt. In der Polsprung-Erkennungseinheit 44 ist ein Modell für den Elektromotor 14 implementiert, mittels dem aus den Werten i_{d,m} und i_{q,m} die zugehörigen Steuerspannungswerte u_{d}', u_{q}' des rotorfesten Zweiphasensystems errechnet werden.

Die errechneten Werte u_{d}', u_{q}' werden mit den tatsächlichen Werten u_{d}, u_{q} verglichen. Das so ermittelte Vergleichssignal wird mit einem vorgebbaren Schwellenwert verglichen, und, wenn dieser überschritten wird, werden die sich in dem Verlauf des Vergleichssignals ergebenden Spitzen gezählt und als repräsentativ für das Auftreten von Polsprüngen gewertet. Ein Polsprung wird demnach immer dann als solcher erkannt, wenn bei einem vorausgehenden relativen Minimum ein nachfolgendes relatives Maximum im Verlauf des Vergleichssignals erreicht wird.

In einer besonderen Ausführungsart der Erfindung werden zunächst das Quadrat des Betrages des Vektors mit den Komponenten u_{d}' und u_{q}' sowie das Quadrat des Betrages des Vektors mit den Komponenten u_{d} und u_{q} gebildet. Anschließend wird die Differenz dieser beiden Quadrate der Beträge gebildet und dieses Differenzsignal wird einem Tiefpass zugeführt. Bei Polsprüngen treten charakteristische Spitzen im Signalverlauf nach dem Tiefpaß auf, die vom plötzlichen Überschreiten der Polgrenze herrühren. Diese Spitzen werden, z. B. durch Vergleich mit einem Schwellenwert detektiert, und, wenn dieser überschritten wird, werden die sich in dem Verlauf des tiefpaßgefilterten Differenzsignals ergebenden Spitzen gezählt und als repräsentativ für das Auftreten von Polsprüngen gewertet. Jede Spitze entspricht hierbei dem Drehwinkel eines magnetischen Pols.

Vorzugsweise werden die so ermittelten Polsprünge aufsummiert. Nach dem Erreichen der vermeintlichen Endposition des Elektromotors 14 werden die aufsummierten Polsprünge durch eine Korrekturbewegung des Elektromotors 14 kompensiert. Hierbei entspricht die Korrektur der Anzahl der gezählten Spitzen des tiefpaßgefilterten Differenzsignals multipliziert mit dem Drehwinkel eines magnetischen Pols.

Die Polsprung-Erkennungseinheit 44 kann alternativ oder ergänzend zu der Auswerteeinheit 47 der Positionsschätzungseinheit 40 vorgesehen sein. Im Falle einer Ergänzung kann die Polsprung-Erkennungseinheit 44 beispielsweise zur Kontrolle der Funktion der Auswerteeinheit 47 vorgesehen sein.

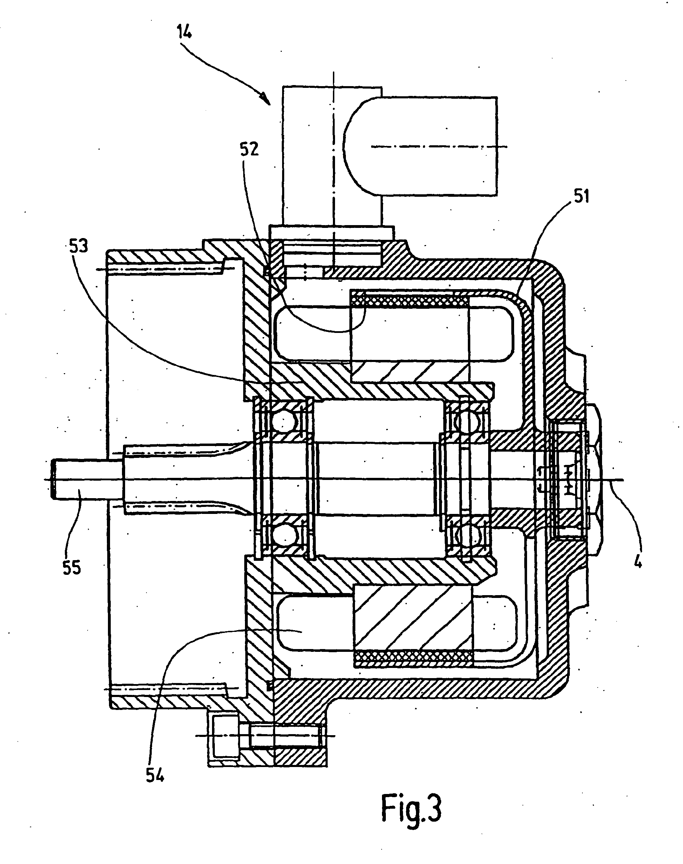

Die Fig. 3 zeigt einen Querschnitt durch den Elektromotor 14 einer erfindungsgemäßen Positionierungseinrichtung 1. Auf der radialen Innenseite des glockenförmigen Rotors 51 sind Permanentmagnete 52 festgelegt. Im dargestellten Ausführungsbeispiel sind insgesamt 28 Permanentmagnete 52 in abwechselnder Polarität aufgeklebt, so daß sich insgesamt eine Polpaarzahl von 28:2=14 ergibt.

Mit geringem Luftspalt zu den Permanentmagneten 52 sind auf den feststehenden Stator 53 insgesamt zwölf Spulenpakete 54 aufgewickelt. Durch den außenlaufenden Rotor 51 lassen sich hohe Drehmomente erzielen. Durch den die Spulenpakete 54 glockenförmig übergreifenden Rotor 51 ist eine besonders kurze axiale Baulänge des Elektromotors 14 möglich. Die Lagerung der Motorwelle 55 erfolgt im Stator 53.

Der Elektromotor 14 weist beispielsweise eine Nennleistung zwischen 0,5 und 10 kW auf, insbesondere zwischen 2 und 5 kWh und vorzugsweise etwa 3,5 kW auf. Die Nenndrehzahl ist abhängig von der Polpaarzahl des Motors, den Ummagnetisierungsverlusten des Motors und der Rechenleistung der Regeleinrichtung 10. Die Nenndrehzahl beträgt hier beispielsweise etwa 4000 U/min. Insbesondere bei Anwendung als Positionierungsvorrichtung 1 für einen Werkzeugrevolver 3 oder für einen sogenannten Rundschalttisch erfolgt eine Übersetzung der Drehzahl des Elektromotors 14 mit einem Getriebe, insbesondere einem Planetengetriebe. Das Übersetzungsverhältnis beträgt zwischen 8:1 und 240:1, insbesondere zwischen 24:1 und 144:1.

Die Positionierungsvorrichtung 1 dient dabei nur der Einstellung der gewünschten Position des Werkzeugrevolvers 3. Sobald diese Position erreicht ist, wird der Werkzeugrevolver 3 durch eine lösbare Festelleinrichtung in seiner durch den Elektromotor 14 eingestellten Position fixiert.

Ein typischer Werkzeugwechsel bei einem Werkzeugrevolver 3 mit einer erfindungsgemäßen Positionierungsvorrichtung 1 ist nachfolgend beschrieben:

Nachdem ein erstes Werkzeug des Werkzeugrevolvers 3 den zugehörigen Arbeitsvorgang beendet hat, und ein Werkzeugwechsel erforderlich ist, wird der Werkzeugwechsel eingeleitet. Hierzu wird zunächst der Elektromotor 14 bestromt. Beim Zurückfahren des Werkzeugrevolvers 3, mit dem das Werkzeug aus dem Eingriff mit dem Werkstück gebracht wird, wird bereits die Feststelleinrichtung zum mechanischen Fixieren der Position des Werkzeugrevolvers 3 gelöst. Unmittelbar anschließend erfolgt eine Neupositionierung des Werkzeugrevolvers 3 nach dem erfindungsgemäßen Verfahren. Vorzugsweise wird als lösbare Feststelleinrichtung eine Hirth-Verzahnung eingesetzt.

Sobald die Endposition des Werkzeugrevolvers 3 erreicht ist, und damit das neue Werkzeug in die geeignete Position gebracht ist, wird der Werkzeugrevolver 3 und insbesondere das Werkzeug wieder an das Werkstück herangefahren. Während des Heranfahrens kommt es bei noch bestromtem Elektromotor 14 zum Aktivieren der mechanischen Feststelleinrichtung und damit zum mechanisch festen Fixieren der Position des Werkzeugrevolvers 3. Erst nachdem die Feststelleinrichtung aktiviert ist, wird der Elektromotor 14 stromlos geschaltet. Unmittelbar anschließend an das Aktivieren der Feststelleinrichtung wird das neue Werkzeug in Eingriff mit dem Werkstück gebracht.

## Patentansprüche

1. Verfahren zum Betrieb einer motorischen Positionierungsvorrichtung (1) mit einem einen Rotor (51) und einen Stator (53) aufweisenden Elektromotor (14), insbesondere Synchronmotor, mit mindestens einem Polpaar sowie einer Regeleinrichtung (10) für den Elektromotor (14), wobei die Strangströme (iₐ, i_{b}, i_{c}) und/oder Strangspannungen des Elektromotors (14) gemessen werden und zur sensorlosen Positionsbestimmung des Rotors (51) verwendet werden, und wobei unterhalb einer vorgebbaren Mindestdrehzahl (Nₘᵢₙ) ein Polsprung des Rotors (51) durch Auswerten der gemessenen Strangströme (iₐ, i_{b}, i_{c}) und/oder Strängspannungen ermittelt wird, und ein ermittelter Polsprung durch Nachregeln des Elektromotors (14) automatisch kompensiert wird, **dadurch gekennzeichnet, daß** die ermittelten Polsprünge aufsummiert werden und die aufsummierten Polsprünge gemeinsam in einer separaten Korrekturbewegung kompensiert werden, und daß sich die Korrekturbewegung an die Positionierungsbewegung anschließt.

2. Verfahren nach Anspruch 7, **dadurch gekennzeichnet daß** der Polsprung durch Vergleich der gemessenen Strangströme (iₐ, i_{b}, i_{c}) und/oder Strangspannungen mit den Stellgrößen (uₐ, u_{b}, u_{c}; u_{α}, u_{β}; u_{d}, u_{α}) der Regeleinrichtung (10) ermittelt wird, insbesondere durch Vergleich von in ein zweiphasiges Bezugssystem transformierten Werten (i_{d,m}, i_{a,m}) der gemessenen Strangströme (iₐ, i_{b}, i_{c}) und/oder Strangspannungen mit den Stellgrößen (u_{d}, u_{q}) in dem zweiphasigen Bezugssystem.

3. Verfahren nach Anspruch 2, **dadurch gekennzeichnet, daß** für den Vergleich die gemessenen Strangströme (iₐ, i_{b}, i_{c}) und/oder Strangspannungen mittels eines in der Regeleinrichtung (10) implementierten Modells des Elektromotors (14) in entsprechende zu erwartende Werte (u_{d}', u_{q}') für die Stellgrößen (u_{d}, u_{q}) der Regelein richtung (10) umgerechnet, werden, die dann mit den tatsächlichen Stellgrößen (u_{d}, u_{q}) der Regeleinrichtung (10) verglichen werden.

4. Verfahren nach einem der Ansprüche 1 bis 3, **dadurch**
**gekennzeichnet, daß** ein Polsprung ermittelt wird durch Auswerten von durch trigonometrische Transformation in ein zweiphasiges Bezugssystem errechnet Werte (i_{α,m}, i_{β,m}; i_{d,m}, i_{q,m}) der gemessenen Strangströme (iₐ; i_{b}, i_{c}) und/oder Strangspannungen, insbesondere von durch Transformation in ein rotorfestes Bezugssystem errechnete Werte (i_{d,m}, i_{q,m}).

5. Verfahren nach einem der Ansprüche 1 bis 4, **dadurch**
**gekennzeichnet, daß** das Kompensieren des ermittelten Polsprungs erst nach einem kurzzeitigen Stillstand des Elektromotors (14) erfolgt.

6. Verfahren nach einem der Ansprüche 1 bis 5, **dadurch**
**gekennzeichnet, daß** mindestens ein Teil der ermittelten Polsprünge bereits während der eigentlichen Positionierungsbewegung, bei der die Polsprünge auftreten, kompensiert werden.

7. Verfahren nach einem der Ansprüche 1 bis 6, **dadurch**
**gekennzeichnet, daß** die Positionierungsvorrichtung (1) eine positionierbare Einrichtung in vorgebbaren Positionen positioniert, insbesondere einen Werkzeugrevolver (3) oder einen schalttisch in vorgebbaren Winkelpositionen positioniert.

8. Verfahren nach Anspruch 7, **dadurch gekennzeichnet, daß** zwischen
dem Elektromotor und der positionierbaren Einrichtung eine lösbare Feststelleinrichtung zum Feststellen der Position der positionierbaren Einrichtung angeordnet ist, und daß der Elektromotor (14) vor dem Lösen der Feststelleinrichtung und/oder bis zum Aktivieren der Feststelleinrichtung bestromt wird.

9. Verfahren nach Anspruch 7 oder 8, **dadurch gekennzeichnet, daß** mindestens ein Startwert für die tatsächliche Position der
positionierbaren Einrichtung durch einen Referenzierungsvorgan ermittelt wird.

10. Positionierungsvorrichtung (1) mit einem einen Rotor (51) und einen Stator (53) aufweisenden Elektromotor (14) mit mindestens einem Polpaar sowie einer Regeleinrichtung (10) für den Elektromotor (14), wobei die Strangströme (iₐ, i_{b}, i_{c}) und/oder Strangspannungen des Elektromotors (14) meßbar und zur sensorlosen Positionsbestimmung des Rotors (51) verwendbar sind, und wobei die Regeleinrichtung (10) eine Polsprung-Erkennungseinheit (44) aufweist, mittels der unterhalb einer vorgebbaren Mindestdrehzahl (Nₘᵢₙ) ein Polsprung des Rotors (51) durch Auswerten der gemessenen Strangströme (iₐ, i_{b}, i_{c}) und/oder Strangspannungen ermittelbar und durch Nachregeln des Elektromotors (14) automatisch kompensierbar ist, **dadurch gekennzeichnet, daß** Mittel bereitgestellt werden, mit denen die Polsprünge aufsummiert werden, wobei die aufsummierten Polsprünge gemeinsam in einer separaten Korrekturbewegung kompensiert werden, und sich die Korrekturbewegung an die Positionierungsbewegung anschließt.

11. Positionierungsvorrichtung (1) nach Anspruch 10, **dadurch gekennzeichnet, daß** zwischen dem Elektromotor (14) und einer positionierbaren Einrichtung eine lösbare Feststelleinrichtung, insbesondere eine Hirth-Verzahnung, zum Fixieren der Position der Einrichtung angeordnet ist.

## Claims

1. Method of operating a motorised positioning device (1) with an electric motor (14) having a rotor (51) and a stator (53), especially a synchronous motor, with at least one pair of poles and a controller (10) for the electric motor (14), in which the phase currents (iₐ, i_{b}, i_{c}) and/or phase voltages of the electric motor (14) are measured and used for sensorless determination of the position of the rotor (51), and in which, below a specifiable minimum revolution rate (Nₘᵢₙ), a pole jump of the rotor (51) is detected by evaluating the measured phase currents (iₐ, i_{b}, i_{c}) and/or phase voltages, and a detected pole jump is automatically compensated for by regulating the electric motor (14), **characterised in that** the detected pole jumps are added together and the added pole jumps are compensated for jointly in a separate correction movement, and the correction movement follows on from the positioning movement.

2. Method according to claim 1, **characterised in that** the pole jump is detected by comparing the measured phase currents (iₐ, i_{b}, i_{c}) and/or phase voltages with the control values (uₐ, u_{b}, u_{c}; u_{α}, u_{β}; u_{d}, u_{q}) of the controller (10), especially by comparing values of the measured phase currents (iₐ, i_{b}, i_{c}) and/or phase voltages transformed into a two-phase reference system (i_{d},ₘ, i_{q,m}) with the control values (u_{d}, u_{q}) in the two-phase reference system.

3. Method according to claim 2, **characterised in that** for comparison purposes, the measured phase currents (iₐ, i_{b}, i_{c}) and/or phase voltages are converted by means of a model of the electric motor (14) implemented in the controller (10) into corresponding expected values (u_{d}', u_{q}') for the control values (u_{d}, u_{q}) of the controller (10), which are then compared with the actual control values (u_{d}, u_{q}) of the controller (10).

4. Method according to one of claims 1 to 3, **characterised in that** a pole jump is detected by evaluating values of the measured phase currents (iₐ, i_{b}, i_{c}) and/or phase voltages calculated by trigonometric transformation into a two-phase reference system (i_{α,m}, i_{β,m}; i_{d,m}, i_{q,m}), especially of values calculated by transformation into a stationary-rotor reference system (i_{d,m}, i_{q,m}).

5. Method according to one of claims 1 to 4, **characterised in that** the detected pole jump is compensated for only after a brief stoppage of the electric motor (14).

6. Method according to one of claims 1 to 5, **characterised in that** at least some of the detected pole jumps are already compensated for during the actual positioning movement in which the pole jumps occur.

7. Method according to one of claims 1 to 6, **characterised in that** the positioning device (1) positions a positionable device in specifiable positions, especially a tool turret (3) or an indexing table in specifiable angular positions.

8. Method according to claim 7, **characterised in that** a detachable locking device is arranged between the electric motor (14) and the positionable device to fix the position of the positionable device, and that a current is passed through the electric motor (14) before detaching the locking device and/or until activation of the locking device.

9. Method according to claim 7 or 8, **characterised in that** at least one starting value for the actual position of the positionable device is detected by a referencing process.

10. Positioning device (1) with an electric motor (14) having a rotor (51) and a stator (53), with at least one pair of poles and a controller (10) for the electric motor (14), in which the phase currents (iₐ, i_{b}, i_{c}) and/or phase voltages of the electric motor (14) are measurable and usable for sensorless determination of the position of the rotor (51), and in which the controller (10) has a pole jump recognition unit (44), by means of which, below a specifiable minimum revolution rate (Nₘᵢₙ), a pole jump of the rotor (51) is detected by evaluating the measured phase currents (iₐ, i_{b}, i_{c}) and/or phase voltages, and is automatically compensated for by regulating the electric motor (14), **characterised in that** means are provided with which the pole jumps are added together, the added pole jumps being compensated for jointly in a separate correction movement, and the correction movement follows on from the positioning movement.

11. Positioning device (1) according to claim 10, **characterised in that** a detachable locking device, in particular a serration, is arranged between the electric motor (14) and the positionable device in order to fix the position of the device.

## Revendications

1. Procédé pour faire fonctionner un dispositif (1) motorisé de mise en position comprenant un moteur (14) électrique ayant un rotor (51) et un stator (53), notamment un moteur synchrone, ayant au moins une paire de pôles ainsi qu'un dispositif (10) de régulation du moteur (14) électrique, les courants (ia, ib, ic) de phase et/ou les tensions de phase du moteur (14) électrique étant mesurés et utilisés pour la détermination de position du rotor (51) sans capteur, et dans lequel en dessous d'une vitesse (Nmin)de rotation minimum pouvant être prescrite, on détermine un saut polaire du rotor (51) en exploitant les courants (ia, ib, ic) et/ou les tensions de phase mesurées et on compense automatiquement un saut polaire déterminé par un reréglage du moteur (14) électrique
**caractérisé en ce que** l'on somme les sauts polaires déterminés et on compense les sauts polaires sommés en commun dans un mouvement de correction séparé et **en ce que** le mouvement de correction séparé fait suite au mouvement de mise en position.

2. Procédé suivant la revendication 1,
**caractérisé en ce que** l'on détermine le saut polaire en comparant les courants (ia, ib, ic) de phase et/ou les tensions de phase mesurées aux grandeurs (Ua, Ub, Uc, Uα, Uβ, Ud, Uq) de réglage du dispositif (10) de régulation, notamment en comparant des valeurs (idm, iqm), transformées dans un système de référence à deux phases, des courants (ia, ib, ic) de phase et/ou des tensions de phase mesurées aux grandeurs (Ud, Uq) de réglage dans le système de référence à deux phases.

3. Procédé suivant la revendication 2,
**caractérisé en ce que**, pour la comparaison, on recalcule les courants (ia, ib, ic) de phase et/ou les tensions de phase mesurées au moyen d'un modèle du moteur (14) électrique mis en oeuvre dans le dispositif (10) de régulation, en des valeurs (Ud', Uq') correspondantes auxquelles on s'attend pour les grandeurs (Ud, Uq) de réglage de dispositif (10) de régulation, valeurs que l'on compare ensuite aux grandeurs (Ud, Uc) de réglage réelles du dispositif (10) de régulation.

4. Procédé suivant l'une des revendications 1 à 3,
**caractérisé en ce que** l'on détermine un saut polaire en évaluant des valeurs (iαm, iβm, idm, iqm) des courants (ia, ib, ic) de phase et/ou des tensions de phase mesurées, calculées par transformation trigonométrique dans un système de référence à deux phases, notamment par transformation de valeur (idm, iqm) calculées par transformation dans un système de référence rotationnel fixe.

5. Procédé suivant l'une des revendications 1 à 4,
**caractérisé en ce qu'**on effectue la compensation du saut polaire déterminé seulement après un arrêt de courte durée du moteur (14) électrique.

6. Procédé suivant l'une des revendications 1 à 5,
**caractérisé en ce que** l'on compense au moins une partie des sauts polaires déterminés déjà pendant le mouvement proprement dit de mise en position, dans lequel les sauts polaires se produisent.

7. Procédé suivant l'une des revendications 1 à 6,
**caractérisé en ce que** le dispositif (1) de mise en position met en des positions pouvant être prescrites un dispositif pouvant être mis en position, notamment une tourelle (3) à outil ou une table à transfert circulaire.

8. Procédé suivant la revendication 7,
**caractérisé en ce qu'**entre le moteur (14) électrique et le dispositif pouvant être mis en position, est disposé un dispositif amovible de fixation de la position du dispositif pouvant être mis en position et **en ce que** le moteur (14) électrique est alimenté en courant avant le desserrage du dispositif de fixation et/ou jusqu'à l'activation du dispositif de fixation.

9. Procédé suivant la revendication 7 ou 8,
**caractérisé en ce que** l'on détermine au moins une valeur initiale de la position réelle du dispositif pouvant être mis en position par une opération de référencement.

10. Dispositif (1) de mise en position, comprenant un moteur (14) électrique ayant un rotor (51) et un stator (53) et ayant au moins une paire de pôles ainsi qu'une dispositif de régulation du moteur (14) électrique, les courants (ia, ib, ic) de phase et/ou les tensions de phase du moteur (14) électrique pouvant être mesurés et utilisés pour la détermination sans capteur de la position du rotor (51), et dans lequel le dispositif de régulation a une unité (14) de détection de saut polaire, au moyen de laquelle un saut polaire du rotor (51) en dessous d'une vitesse (Nmin) de rotation minimum pouvant être prescrite, peut être déterminé en exploitant les courants (ia, ib, ic) de phase et/ou les tensions de phase mesurés et être compensé automatiquement en rerégulant le moteur (14) électrique, **caractérisé en ce qu'**il est prévu des moyens par lesquels les sauts polaires sont sommés, les sauts polaires sommés étant compensés en commun dans un mouvement séparé de correction et le mouvement de correction faisant suite au mouvement de mise en position.

11. Dispositif (1) suivant la revendication 10,
**caractérisé en ce qu'**entre le moteur (14) électrique et un dispositif pouvant être mis en position, est disposé un dispositif amovible de fixation, notamment un crantage, pour fixer la position du dispositif.
